(19) Europäisches Patentamt
European Patent Office
Office européen des brevets

(11) Publication number: **0 143 830**
**B1**

(12) # EUROPEAN PATENT SPECIFICATION

(45) Date of publication of patent specification: **12.10.88**

(51) Int. Cl.$^4$: **B 32 B 3/00,** B 32 B 7/04

(21) Application number: **84902147.2**

(22) Date of filing: **04.05.84**

(86) International application number:
**PCT/US84/00684**

(87) International publication number:
**WO 84/04488 22.11.84 Gazette 84/27**

(54) **PILE DAMPER MECHANISM.**

(30) Priority: **16.05.83 US 494783**

(43) Date of publication of application:
**12.06.85 Bulletin 85/24**

(45) Publication of the grant of the patent:
**12.10.88 Bulletin 88/41**

(84) Designated Contracting States:
**AT BE CH DE FR GB LI NL SE**

(56) References cited:
**FR-A-2 101 195**
**GB-A- 4 168**
**SU-A- 763 627**
**US-A-1 908 643**
**US-A-1 931 881**
**US-A-1 958 115**
**US-A-3 308 490**
**US-A-3 444 957**
**US-A-3 610 604**
**US-A-3 906 128**

(73) Proprietor: **SCHLEGEL CORPORATION**
**400 East Avenue**
**Rochester, New York 14607 (US)**

(72) Inventor: **ANNIS, Gerald A.**
**102 Benedict Road**
**Pittsford, NY 14534 (US)**

(74) Representative: **Carpmael, John William Maurice et al**
**CARPMAELS & RANSFORD 43 Bloomsbury Square**
**London, WC1A 2RA (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 143 830 B1**

Courier Press, Leamington Spa, England.

**Description**

This invention relates in general to mechanical dampers and more particularly to a damper wherein the interaction of two pile layers on spaced-apart opposed surfaces of two relatively movable cylindrical members provides the damping effect.

Dampers per se are well known. Heretofore, such dampers have generally relied upon the controlled passage of a fluid through a small orifice for providing damping action. Such hydraulic dampers have several disadvantages, including sensitivity to temperature and pressure, the necessity for providing seals between the relatively movable members thereof for constraining the passage of the fluid damping medium to the desired orifices, the necessity for providing close tolerances necessitating the use of expensive machined parts, high cost, limited life, and the difficulty of providing specially selected damping characteristics.

Accordingly, it is an object of this invention to provide a damping mechanism that does not rely on the use of a fluid damping medium.

It is another object of this invention to provide a damping mechanism that does not require the close tolerances or expensive seals required in fluid damping mechanisms in accordance with the prior art.

It is a further object of this invention to provide a damping mechanism that is readily adapted to provide a wide range of damping characteristics including varying characteristics not heretofore obtainable by any prior art mechanisms.

It is a still further object of this invention to provide a damping mechanism that may be manufactured from inexpensive parts such as plastic without degrading the effectiveness of the mechanism.

In US-A-3610604, a vibration absorbing mechanism which makes use of friction between confronting filamentary materials, which extend normally outwardly from respective sides of a pair of base members movable towards and away from each other, is disclosed. This mechanism also has shock absorbing properties for external forces normal to the direction of relative movement between the members. However, the filaments are long and the mechanism is not intended to damp movement in directions parallel to the surfaces of the base members.

SU-A-763627 discloses a torque vibration damper in which single flexible radially extending elements co-operate with crescent shaped rigid plates and US-A-1908643 shows a window channel having a single pile damping layer acting on a smooth opposing surface. However, the specifications only have single pile layers which act as cushioning devices, and do not disclose pile damper mechanisms per se, which rely on the interaction of two pile layers.

According to the present invention, we provide a damper comprising first and second relatively movable rigid members having first and second spaced apart opposing surfaces one of which has a layer of pile thereon, characterised in that said first and second relatively movable members are cylindrical members disposed co-axially and in that a first layer of pile is disposed on the outer surface of the inner cylindrical member and a second layer of pile is disposed on the inner cylindrical surface of the outer member, one of said layers of pile being the pile on said one member, the fibres of said pile layers at least partially interlocking or overlapping for damping relative movement between said members.

Through selection of the pile material, density, degree of overlap, orientation and spacing, a wide range of damping characteristics can be achieved.

Several embodiments of the invention are now described by way of example with reference to the accompanying drawings, in which:-

FIGURE 1 is a sectional view of a cylindrical damper in accordance with this invention and showing angled pile fibres;

FIGURE 2 shows a damper in accordance with this invention particularly designed for damping relative rotational movement;

FIGURE 3 is a cross-sectional view of the damper of Figure 2, and

FIGURES 4 and 5 are cross-sectional views of dampers similar to that shown in Figure 2, but having selectable damping characteristics.

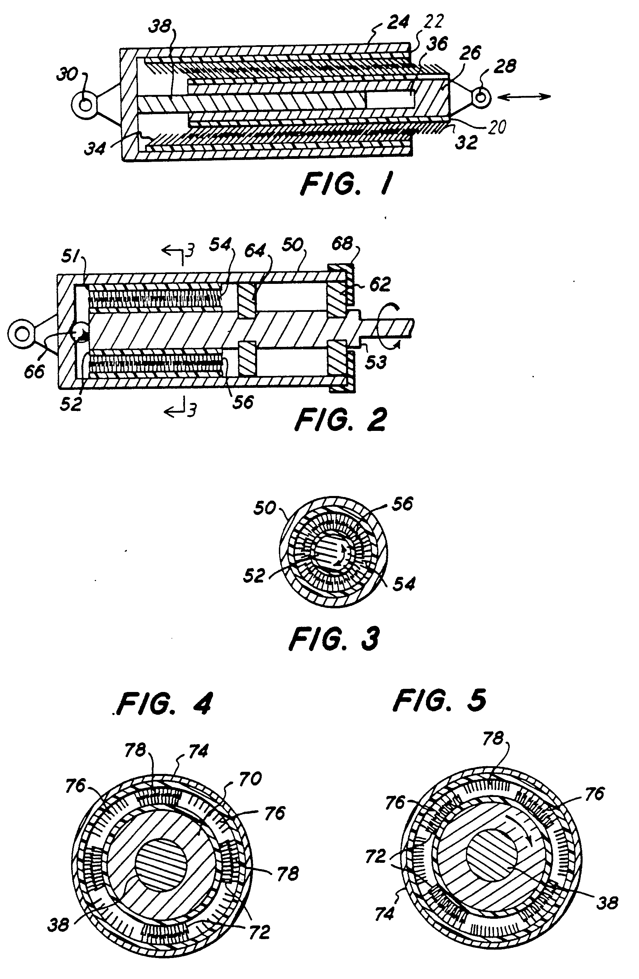

Referring now to Figure 1, a cylindrical damper in accordance with this invention is shown including an outer relatively movable element 24 and an inner relatively movable element 26 adapted to be connected to other elements of a mechanical system by fastening means 28 and 30 which may be eyes or other well known mechanical fasteners. First and second layers of pile material 32 and 34 are attached to the relatively movable members. The generally upstanding fibres of pile layers 32 and 34 interengage to provide resistance to relative movement. The damper can employ inclined pile fibres for providing directionally dependent damping characteristics. It will be appreciated by reference to Figure 1 that as the mechanical elements 24 and 26 are separated, the damping effect will be less than when they are forced together. Inner element 26 may include a cylindrical bore 36 for slidably receiving optional coaxial support 38 of outer element 24. The relative position of pile layers 32 and 34 is thereby maintained as elements 24 and 26 are displaced.

While in Figure 1 the pile fibres in both layers 32 and 34 are inclined, this is not essential and variations in damping characteristics may be achieved by varying the angles at which one or both of the pile layers are disposed. Where, as in this case, pile layers 32 and 34 are formed on layers of backing material such as backing layers 20 and 22, the pile layers may be affixed to the relatively movable elements by chemically or mechanically attaching backing layers 20 and 22 to facing surfaces of movable members 24 and 26, respectively.

The fibres of pile layers 32 and 34 overlap and provide resistance to relative movement of the members 12 and 14. In contrast to hydraulic dampers, the embodiment of this invention shown in Figure 1 provides rate insensitive damping characteristics, that is, damping characteristics that are relatively constant with respect to the speed of relative movement.

There are a multiplicity of known methods for forming layers of pile material. One such method includes providing a woven fabric backing strip having tufts of pile fibres extending therethrough and held in place by the threads of the woven backing. Alternatively, a base strip may be made of rubber or plastic sheeting to which the upstanding fibres are secured in any suitable fashion such as by the use of an adhesive, by thermoplastic bonding, flocking or the like. The pile fibres themselves may be upstanding single filament fibres, looped fibres, fibres of round, square, X-shaped or other cross-section, or of any other form of characteristics capable of slidable interengagement with other similar or dissimilar fibres in accordance with this invention.

The materials for the backing strip and pile fibres may be selected from a wide variety of natural and synthetic materials depending upon the particular characteristics required. Pile materials such as known synthetic materials including polypropylene, nylon, orlon or the like, or natural fibres such as mohair, goat hair, wool, jute or the like, or any combination thereof may be used. Non-textile fibres such as metal fibres, carbon fibres, fibreglass fibres and the like may also be used where specific properties such as electrical conductivity or insulation, weather resistance, thermal insulation and the like are required. Woven backing strips may be provided from any of the above materials or other materials suitable for weaving. Plastic or metal film backing materials such as plastics including polypropylene or other flexible thermoplastic material may be employed.

In a modification of this invention (not illustrated) the arrangement of Figure 1 may be employed but with one or more of the pile layers having a pile density that varies along the length of the movable element. Relatively movable elements 24 and 26 are provided with first and second layers of pile material, respectively, the first pile layer being of relatively constant pile density, while the second pile layer has relatively low density at the left-hand edge of the movable element and a relatively high density at the righthand edge, so that as the elements are moved relative to each other, the damping effect is increased dramatically. While the pile layers may be orientated as shown in Figure 1, they may alternatively be orientated substantially normal to the surfaces of the relatively movable elements. Thus, by varying pile orientation in combination with varying pile density, even greater flexibility in providing the desired damping characteristics can be achieved.

Figure 2 illustrates a damper in accordance with this invention adapted for damping relative rotational movement between two elements. Figure 3 is a sectional view of the damper of Figure 2 taken along the line 3-3. The damper shown in Figures 2 and 3 includes an outer cylindrical member 50 and an inner cylindrical member 53 disposed in spaced-apart relatively rotatable orientation and having first and second pile layers 54 and 56 including backing layers 51 and 52 attached to elements 50 and 53, respectively. Bearings 62, 64 and 66 support inner member 53 for rotational movement, and end cap 68 prevents axial displacement of member 53. While the pile layers 54 and 56 are shown orientated substantially normal to the surfaces of movable members 50 and 53, respectively, other orientations may be employed for providing increased damping in one rotational direction and decreased damping in the other rotational direction.

Figures 4 and 5 show another embodiment of this invention similar to the embodiment shown in Figure 1, but adapted to provide selectable damping characteristics in a single device. Figures 4 and 5 are cross-sectional views of a cylindrical damper, including inner and outer coaxial elements 70 and 74, adapted for relative coaxial linear motion. Inner member 70 is provided with a plurality of circumferentially spaced-apart pile layers 72 of relatively constant pile density, and outer member 74 is provided with a first set of circumferentially spaced-apart pile layers 76 of a first density and a second set of circumferentially spaced-apart pile layers 78 of a greater density. By rotating inner relatively movable member 70 between the position shown in Figure 4 and the position shown in Figure 5, greater and lesser damping, respectively, of the relative coaxial linear motion of the elements may be achieved.

As can be seen in the position shown in Figure 4, pile layers 72 engage relatively dense pile layers 78 for relatively greater resistance to axial movement, while in the position shown in Figure 5, pile layers 72 engage less dense pile layers 76 for relatively lower resistance to axial movement. Those skilled in the art will appreciate that additional selected damping characteristics may be provided by providing additional circumferentially spaced-apart pile layers on outer member 74 and additional positions for inner member 76.

The linear and rotational damping characteristics of the embodiments of this invention of Figures 3, 4 and 5 may be combined if desired to provide a damper providing both rotational and axial damping not heretofore achievable.

While pile material has been described including a backing strip to which pile fibres are attached, by selecting appropriate materials for the relatively movable mechanical members, pile fibres may be affixed directly thereto, for example, by thermoplastic welding or by flocking or through the use of an intermediate adhesive layer or by any other technique suitable therefor.

Further, while relatively movable members having surfaces covered with layers of pile disposed at substantially constant spacing have been illustrated, arrangements may be used where the spacing between the pile covered layers varies with the relative displacement of the members whereby the penetration of the fibres of one pile layer into the fibres of the opposing pile layer increases or decreases with displacement providing an effect similar to that provided by varying the pile density. Still further, while the embodiment of this invention illustrated in Figure 2 is designed to provide rotational damping by greatly increasing the angle at which the pile layers are disposed, the damping force can be increased to the point of providing a ratcheting action without the need for gear teeth or other conventional mechanisms used therefor.

While the invention has been shown and described in connection with a number of presently preferred embodiments thereof, those skilled in the art will recognise that certain modifications and changes may be made thereto without departing from the true scope of the invention. Accordingly, it is intended that the scope of the invention be limited solely by the appended claims.

**Claims**

1. A damper comprising first and second relatively movable rigid members (24, 26 or 50, 53 or 70, 74) having first and second spaced apart opposing surfaces one of which has a layer of pile thereon, characterised in that said first and second relatively movable members are cylindrical members disposed co-axially and in that a first layer of pile is disposed on the outer surface of the inner cylindrical member and a second layer of pile is disposed on the inner cylindrical surface of the outer member, one of said layers of pile being the pile on said one member, the fibres of said pile layers (16, 18) at least partially interlocking or overlapping for damping relative movement between said members (12, 14).

2. A damper according to claim 1 characterised in that means (26, 38, 64, 50 or 38, 70) are provided to confine said members (24, 26, 50, 53 or 70, 74) against movement transverse to said surfaces.

3. A damper according to claim 1 or 2 characterised in that said members (24, 26, 50, 54 or 70, 74) are adapted for relative axial movement.

4. A damper according to claim 1, 2 or 3 characterised in that said members (50, 54) are adapted for relative rotational movement.

5. A damper according to any one of claims 1-4 characterised in that said first and second pile layers comprise pile layers of substantially constant pile density.

6. A damper according to any one of claims 1-4 characterised in that said first and second pile layers comprise layers of pile of varying density.

7. A damper according to any one of claims 1-6 characterised in that the fibres of said first pile layer engage only a portion of the fibres of said second pile layer.

8. A damper according to any one of claims 1-7 characterised in that the fibres of said first and second pile layers (54, 56) are disposed substantially normal to said opposing surfaces of said first and second relatively movable members (50, 53).

9. A damper according to any one of claims 1-7 characterised in that said first and second pile layers (32, 34) comprise pile fibres orientated at an angle less than 90° to said opposing surfaces of said first and second relatively movable members (24, 26).

10. A damper according to any one of claims 1-9 characterised in that said fibres (74, 76, 78) are arranged to provide selectable damping by rotating the members relative to each other to different selected relative positions.

11. A damper according to any one of the preceding claims characterised in that the spacing between the surfaces varies with the relative displacement of the members.

**Patentansprüche**

1. Dämpfungselement, das erste und zweite relativ zueinander bewegbare starre Glieder (24, 26 oder 50, 53 oder 70, 74) mit ersten und zweiten in einem Abstand angeordneten, einander gegenüberstehenden Oberflächen aufweist, von denen die eine eine Schicht von Flor, Wolle, Fell, Pelz oder kurzen Fäden oder Fibern trägt, dadurch gekennzeichnet, daß die ersten und zweiten relativ zueinander bewegbaren Glieder zylindrische Glieder sind, die koaxial angeordnet sind, und daß eine erste Schicht von Flor, Wolle, Fell, Pelz oder kurzen Fäden oder Fibern auf der äußeren Oberfläche des inneren zylindrischen Gliedes und eine zweite Schicht von Flor, Wolle, Fell, Pelz oder kurzen Fäden oder Fibern auf der inneren zylindrischen Oberfläche des äußeren Gliedes angeordnet ist, wobei eine der Schichten von Flor, Wolle, Fell, Pelz oder kurzen Fäden oder Fibern, der Flor, die Wolle, das Fell, der Pelz oder die kurzen Fäden oder Fibern auf dem einem Glied sind, wobei die Fasern oder Fäden der Schichten (16, 18) von Flor, Wolle, Fell, Pelz, oder kurzen Fäden oder Fibern wenigstens teilweise ineinander eingreifen oder überlappen, um relative Bewegung zwischen den Gliedern (12, 14) zu dämpfen.

2. Dämpfungselement nach Anspruch 1, dadurch gekennzeichnet, daß Mittel (26, 38, 64, 50 oder 38, 70) vorgesehen sind, um die Glieder (24, 26, 50, 53 oder 70, 74) gegen eine Bewegung quer zu den Oberflächen einzuschränken.

3. Dämpfungselement nach Anspruch 1 oder 2, dadurch gekennzeichnet, daß die Glieder (24, 26, 50, 54 oder 70, 74) für relative Axialbewegung angepaßt sind.

4. Dämpfungselement nach Anspruch 1, 2 oder 3, dadurch gekennzeichnet, daß die Glieder (50, 54) für relative Drehbewegung angepaßt sind.

5. Dämpfungselement nach einem der Ansprüche 1 bis 4, dadurch gekennzeichnet, daß die ersten und zweiten Schichten von Flor, Wolle, Fell, Pelz oder kurzen Fäden oder Fibern Schichten von Flor, Wolle, Fell, Pelz oder kurzen Fäden oder Fibern von im wesentlichen konstanter Fadenoder Faserdichte aufweisen.

6. Dämpfungselement nach einem der Ansprüche 1 bis 4, dadurch gekennzeichnet, daß die ersten und zweiten Schichten von Flor, Wolle, Fell, Pelz oder kurzen Fäden oder Fibern Schichten von Flor, Wolle, Fell, Pelz oder kurzen Fäden oder Fibern von variierender Dichte aufweisen.

7. Dämpfungselement nach einem der Ansprüche 1 bis 6, dadurch gekennzeichnet, daß die Fasern oder Fäden der ersten Schicht von Flor, Wolle, Fell, Pelz oder kurzen Fäden oder Fibern nur an einem Teil der Fasern oder Fäden der zweiten Schicht von Flor, Wolle, Fell, Pelz oder kurzen Fäden oder Fibern angreifen.

8. Dämpfungselement nach einem der Ansprüche 1 bis 7, dadurch gekennzeichnet, daß die Fasern oder Fäden der ersten und zweiten Schichten (54, 56) von Flor, Wolle, Fell, Pelz oder kurzen Fäden oder Fibern im wesentlichen senkrecht zu den gegenüberliegendenden Oberflächen der ersten und zweiten relativ zueinander bewegbaren Elemente (50, 53) angeordnet sind.

9. Dämpfungselement nach einem der Ansprüche 1 bis 7, dadurch gekennzeichnet, daß die ersten und zweiten Schichten von Flor, Wolle, Fell, Pelz oder kurzen Fäden oder Fibern (32, 34) Flor, Wolle, Fell, Pelz oder kurze Fäden oder Fibern oder andere Fasern oder Fäden aufweisen, die unter einem Winkel von weniger als 90° zu den gegenüberstehenden Oberflächen der ersten und zweiten relativ zueinander bewegbaren Glieder (24, 26) ausgerichtet sind.

10. Dämpfungselement nach einem der Ansprüche 1 bis 9, dadurch gekennzeichnet, daß die Fasern oder Fäden (74, 76, 78) so angeordnet sind, daß sie ein auswählbares Dämpfen durch Drehen der Glieder relativ zueinander zu unterschiedlich ausgewählten relativen Stellungen ermöglichen.

11. Dämpfungselement nach einem der vorangehenden Ansprüche, dadurch gekennzeichnet, daß der Abstand zwischen den Oberflachen mit der relativen Verschiebung der Glieder sich ändert.

**Revendications**

1. Amortisseur comprenant des premier et second éléments rigides (24, 26 ou 50, 53 ou 70, 74) mobiles l'un par rapport à l'autre ayant des première et seconde surfaces opposées, espacées l'une de l'autre, sur l'une desquelles se trouve une couche de poil, caractérisé en ce que lesdits premier et second éléments mobiles antagonistes sont des éléments cylindriques disposés coaxialement et en ce qu'une première couche de poil est disposée sur la surface extérieure de l'élément cylindrique interne et une seconde couche de poil est disposée sur la surface cylindrique intérieure de l'élément externe, une desdites couches de poil étant le poil dudit premier élément, les fibres desdites couches (16, 18) de poil s'enchevêtrant ou se chevauchant au moins partiellement pour amortir le mouvement relatif entre lesdits éléments (12, 14).

2. Amortisseur selon la revendication 1, caractérisé en ce que des moyens (26, 38, 64, 50 ou 38, 70) sont présents pour empêcher lesdits éléments (24, 26, 50, 53 ou 70, 74) de se déplacer transversalement par rapport auxdites surfaces.

3. Amortisseur selon la revendication 1 ou 2, caractérisé en ce que lesdits éléments (24, 26, 50, 53 ou 70, 74) sont conçus pour effectuer un mouvement axial relatif.

4. Amortisseur selon la revendication 1, 2 ou 3, caractérisé en ce que lesdits éléments (50, 53) sont conçus pour effectuer un mouvement de rotation relatif.

5. Amortisseur selon l'une quelconque des revendications 1 à 4, caractérisé en ce que lesdites première et seconde couches de poil constituent des couches de poil à densité de poil sensiblement constante.

6. Amortisseur selon l'une quelconque des revendications 1 à 4, caractérisé en ce que lesdites première et seconde couches de poil constituent des couches de poil de densité variable.

7. Amortisseur selon l'une quelconque des revendications 1 à 6, caractérisé en ce que les fibres de ladite première couche de poil ne coopèrent qu'avec une partie des fibres de ladite seconde couche de poil.

8. Amortisseur selon l'une quelconque des revendications 1 à 7, caractérisé en ce que les fibres desdites première et seconde couches de poil (54, 56) sont disposées sensiblement perpendiculairement auxdites surfaces opposées desdits premier et second éléments (50, 53) effectuant un mouvement relatif.

9. Amortisseur selon l'une quelconque des revendications 1 à 7, caractérisé en ce que lesdites première et seconde couches (32, 34) de poil comprennent des fibres formant poil orientées selon un angle inférieur à 90° par rapport auxdites surfaces opposées desdits premier et second éléments (24, 26) effectuant un mouvement relatif.

10. Amortisseur selon l'une quelconque des revendications 1 à 9, caractérisé en ce que lesdites fibres (74, 76, 78) sont agencées pour réaliser un amortissement réglable en faisant tourner les éléments l'un par rapport à l'autre vers différentes positions relatives choisies.

11. Amortisseur selon l'une quelconque des revendications précédentes, caractérisé en ce que l'espacement entre les surfaces varie en fonction du déplacement relatif des éléments.

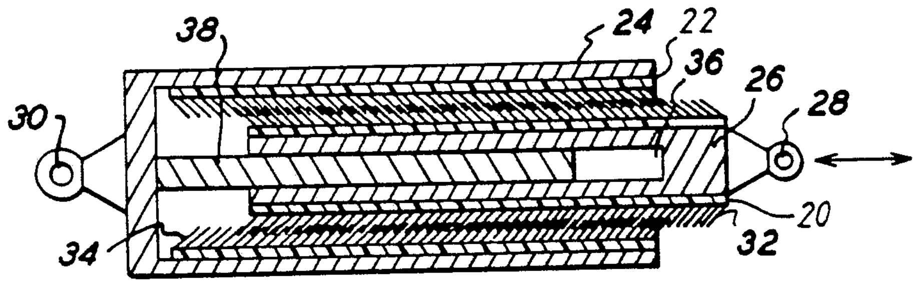


FIG. 1

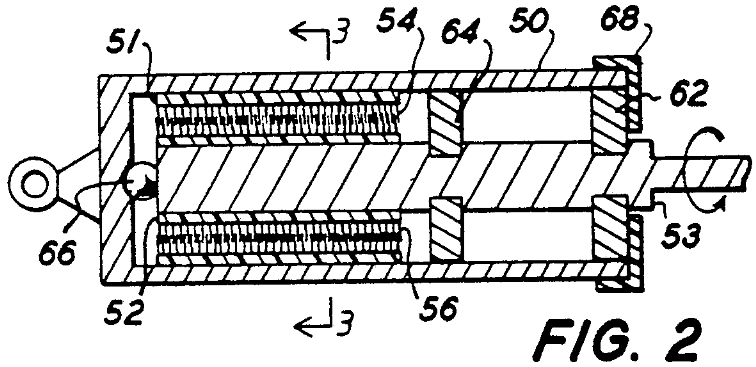


FIG. 2

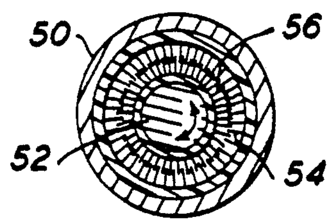


FIG. 3

FIG. 4

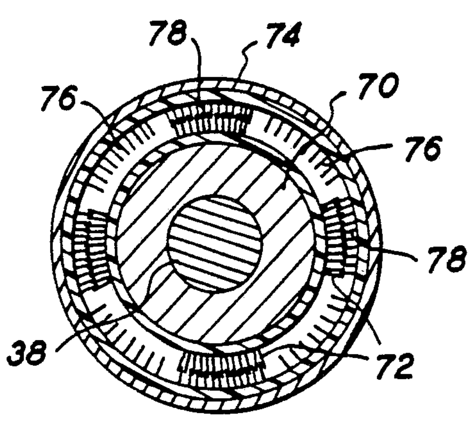


FIG. 5